# EUROPEAN PATENT SPECIFICATION

(11) **EP 3 062 483 B1**
(45) Date of publication and mention of the grant of the patent: **03.05.2023**
(21) Application number: 15156862.3
(22) Date of filing: 27.02.2015
(51) Int. Cl.: H04L 67/52, H04W 4/02, H04W 4/90, H04W 4/029

(54) **System and method for providing location based services, especially emergency calls, for voice calls originating from a data network**
SYSTEM UND VERFAHREN ZUR BEREITSTELLUNG STANDORTBASIERTER DIENSTE, INSBESONDERE VON NOTRUFANRUFEN, FÜR AUS EINEM DATENNETZWERK STAMMENDE SPRACHANRUFE
SYSTÈME ET PROCÉDÉ DE FOURNITURE DE SERVICES GÉODÉPENDANTS, NOTAMMENT DES APPELS D'URGENCE, POUR DES APPELS VOCAUX PROVENANT D'UN RÉSEAU DE DONNÉES

(43) Date of publication of application: 31.08.2016
(73) Proprietor: Vodafone GmbH, 40549 Düsseldorf (DE)
(72) Inventor: Lu, Yang, 40489 Düsseldorf (DE)
(74) Representative: Weisbrodt, Bernd

(56) References cited:
- US-A1- 2007 213 071
- US-A1- 2009 296 689
- US-A1- 2013 122 851

## Description

The present invention relates to a system for providing location based services, especially emergency calls, for voice calls originating from a data network.

Another object of the present invention relates to a method for providing location based services, especially emergency calls, for voice calls originating from a data network.

Traditional telecommunication is performed over a public switch telephone network (PSTN). Determining the location of subscribers in such a telecommunication system is relatively simple since the locations of the end devices, e.g. telephones, are known to the service providers, like telecommunication companies, especially due to installing the fixed telephone lines and/or telephones.

In the past twenty years telecommunication has changed rapidly due to the development and growth of the mobile telephone industry and the internet. In a mobile communication network location based services can for example be provided by using location information provided by a base station where a mobile device is currently registered, for example retrieved by a cell tower triangulation or a location area identity or a cell identifier.

The location information provided by a PSTN or a mobile communication network is for example used to select the proper or appropriate public safety answering point (PSAP), which is used by emergency services to answer emergency calls from the public to notify emergency personnel, such as police or firemen, to respond to an emergency situation.

However, when using data networks for voice calls there are no common means for providing location based services. A telecommunication system receiving an emergency call originating from a data network over the internet is unable to determine the location of the emergency caller. Thus, the telecommunication system is unable to determine the proper or appropriate PSAP which should handle an emergency call.

US 8,290,470 B2 discloses a system and a method for providing location information to a public safety answering point during an emergency call from a wireless local area network (WLAN) handset. According to this system and method the WLAN access point provides location information, like GPS information, to a controller which is configured to handle emergency calls. The GPS information is provided by the handset or WLAN access point itself. Based on this GPS information the controller queries a database to determine the proper or appropriate PSAP. However, no location information can be provided to the controller if neither the handset nor the WLAN access point provides GPS information.

For devices which are unable to report their GPS coordinates to PSAPs or which are not locatable by the mobile communication network via e.g. cell tower triangulation or the like, US 2013/0122851 A1 discloses a location-reporting technique that could optionally supplement or replace the current triangulation and GPS techniques. The disclosed technique suggests including location information into the names associated with or assigned to WLAN access points. These information are forwarded to the PSAP with an emergency call and used by the PSAP to retrieve location information of the emergency caller. For example a mobile device can report the names of all currently available WLANs and their relative signal strength with an emergency call to the PSAP. It is also suggested to add a new information field to a Service Set Identification (SSID) information that is broadcasted or otherwise available from wireless networks. Furthermore, it is suggested to register WLANs to a PSAP to provide extra granularity and location information to the PSAP for that network. However, according to US 2013/0122851 A1 an emergency call is first routed to a PSAP, where the location information is analyzed. Depending on the location information the emergency call can be redirected to another PSAP or emergency response center. Furthermore, the WLANs must support the disclosed location-reporting technique by including location information into the names associated with or assigned to WLAN access points.

US 2013/0143518 A1 provides digital retrieval of Automatic Location Information (ALI) data that is representative of a landline address, with automatic transfer of the same to an emergency call taker over a wireless system emergency network. Before an emergency call is initiated, additional environmental information, such as RFID tag, location beacon, WiFi access point, Bluetooth device, or other communication signal with a known location, is included in the wireless session data exchange, which is then used to match one or more location inputs to a fixed civic location (street address) which is used to dispatch emergency responders. Thus, several location information are used to determine a landline address of an emergency caller. The collection of multiple location information and analyzing these data requires additional time.

US 8,194,826 B2 relates to access networks, such as wireless local area networks (WLANs) and, more specifically, to a mechanism for requesting and admitting an emergency Voice over Internet Protocol (VoIP) phone call through an access network in which Extensible Authentication Protocol (EAP) is used. The access network can also provide information indicating its location (i.e. the location of the hotspot and thus the location of the user) and route the location information to the local emergency call system. Thus, the access network must be configured to provide information indicating its location.

US 2007/0213071 A1 discloses methods for accurately determining the location of a mobile device for a UMA network. When placing a special number call, such as a 9-1-1 call, the mobile device transmits access point identifiers (AP-ID) for a plurality of the access points accessible to the mobile device and a UNC in the UMA network receives the plurality of AP-ID's from the mobile device, wherein the UNC is connected to a location system and transmits the AP-ID's to the location system over the connection. Furthermore, the location system receives the AP-ID's over the connection and queries an access point database that stores a location for each access point registered in the database, wherein the location system then identifies a plurality of locations for the plurality of access points from the access point database, and estimates the location of the mobile device based on the plurality of locations identified for the plurality of access points.

US 2009/0296689 A1 discloses a network component which includes a processor that is configured, upon the network component receiving an IMS emergency call from a UE, to detect in the emergency call an indicator requesting the network component to restrict presentation of private information related to the UE. The processor is further configured, when the indicator is present, to transmit the emergency call without at least some of the private information to a Public Safety Answering Point.

It is therefore an object of the present invention to provide a system and method for providing location based services, like e.g. emergency calls, for voice calls originating from a data network, particularly a wireless local area network (WLAN), wherein neither the data network nor the user device have to provide the location information.

The object is solved by a system for providing location based services as defined in the appended claims.

According to an advantageous embodiment of the present invention the data network uses the Internet Protocol (IP), like e.g. Internet Protocol Version 4 (IPv4) or Internet Protocol Version 6 (IPv6), as a transport protocol on the network layer according to the Open Systems Interconnections Model (OSI-Model). Preferably the data network is a local area network or a wireless local area network.

The voice call handling unit is included in an IP Multimedia Subsystem (IMS) of a data network according to the 3^{rd} Generation Partnership Project (3GPP). The IP Multimedia Subsystem or IP Multimedia Core Network Subsystem (IMS) is an architectural framework for delivering voice over IP (VoIP) or IP multimedia services and to provide standardization delivering voice or other multimedia services over IP.

According to a further preferred embodiment of the present invention the voice call handling unit is a software unit included in the IP Multimedia Subsystem (IMS).

The object is further solved by a method for providing location based services as defined in the appended claims.

According to the inventive system and method a voice call originating from a data network comprises a unique data network identifier associated with the data network from which the voice call originates. The voice call is received by a voice call handling unit for receiving, processing and/or forwarding voice calls from the data network. The voice call handling unit extracts from the received voice call the unique data network identifier associated with the originating data network.

Afterwards the voice call handling unit sends a request to a database which associates unique data network identifiers of data networks with location information corresponding to these data networks. Thus, the voice call handling unit queries location information associated with the unique data network identifier from the database. In consideration of the location information requested from the database the voice call handling unit forwards the voice call originating from the data network to a specific destination, for example the PSAP responsible for the location corresponding to the retrieved location information.

The inventive system and method can be used for any location based service, like e.g. taxi ordering, food ordering/delivery, or any other ordering service, and are not limited to emergency calls. An emergency call according to the invention includes calling a car breakdown service or similar service.

The unique data network identifier comprises Basic Set Identification (BSSID) of a device providing the data network, like e.g. the BSSID of the hotspot providing a WLAN. Since the BSSID is unique the corresponding data networks can unambiguously identified.

The voice call is forwarded in consideration of the location information requested from the database to a specific destination, the specific destination relates to the geographical location of the data network from which the voice call originates, namely PSAP or another service provider responsible for the geographical area of the data network from which the voice call originates.

In a particularly preferred variant of the invention the data network and/or the voice call uses the Session Initiation Protocol (SIP) for signaling. Since the SIP is commonly used, the invention can be used by a wide range of system with minimal modification. It is particularly preferred that the SIP message comprises the unique network identifier, like e.g. the BSSID, for instance including the BSSID in the P-Access-Network-Info header in the SIP INVITE message. Advantageously another message is inventively useable, for example especially the last accessed WLAN BSSID according to a LOCATION UPDATING REQUEST message, which content for example is defined in table 9.2.17 of 3 GPP TS 24.008.

The location information stored in the database comprises a specific Public Safety Answering Point (PSAP) or another local service provider identifier responsible for the geographical location of the data network from which the voice call originates. Thus, the database directly provides the voice call handling unit with the responsible PSAP or service provider to which the voice call should be forwarded. In case the voice call handling unit only receives location information from the database it has to map these retrieved location information to a responsible PSAP or service provider. This mapping can be avoided in case the database comprises a specific Public Safety Answering Point (PSAP) or another local service provider identifier responsible for the geographical location of the data network from which the voice call originates.

An unclaimed aspect relates to a mobile device comprising a network adapter for connecting the device to a data network and means for detecting the location of the mobile device, wherein the mobile device retrieves from an identified data network a unique network identifier and at the same time determines the location of the mobile device and sends the unique network identifier and the determined location information to a database associating unique data network identifiers of data networks with location information corresponding to these data networks.

The unique network identifier and the determined location information are send to the database on discovery, during periodic updates or during regular signaling between the mobile device and a data network.

The mobile device is a mobile phone for use with a mobile communication network according to the GSM-, UMTS-, LTE- or similar mobile communication standard and further comprises an interface for connecting the mobile device to a data network like e.g. a WLAN.

A WLAN is a type of data network in which the data is transmitted between the user's terminal and a so-called access point or hotspot via a radio communication. The access point is part of the data network and the user can transparently access computers or other devices connected to the data network from the user's terminal. For example, a user with a wireless VoIP terminal can place telephone calls through the data network in manner similar to place a telephone call using a cellular telephone.

A WLAN standard developed by the 3^{rd} Generation Partnership Program (3GPP), a consortium of telecommunications standards bodies operating under a collaboration agreement, provides an architecture in which a user's terminal can connect via a WLAN to a remote data network, such as the Internet or a core network of cellular telecommunication systems. The mechanism as it applies to cellular telecommunication operators inter-working with WLANs is defined in 3GPP's documents TS 23.234 and TS 24.234.

Public WLAN refers to the placement of access points in publicly accessible areas, such as airport lounges, waiting rooms, coffeehouses and so on. The access points are also called hotspots. Using a public WLAN a user can check his e-mails, surf in the internet, upload/download files and so forth. A user having a VoIP terminal can place VoIP telephone calls using a public WLAN.

The invention advantageously provides location based services for such (public) WLANs.

The location information are detected by a cell tower triangulation provided by the mobile communication network or the location information comprises location information of the mobile communication network like e.g. a cell identifier. To retrieve location information by a cell tower triangulation is advantageous, since the retrieved location information is mostly accurate, whereas a location information based on cell identifier has the advantage that the location information stored in the database can only be mapped to real geographic location information by someone who has detailed knowledge about the cell identifier. For example normally only a mobile communication network operator has knowledge about the mapping between the cell identifiers and real geographic areas. Thus, the location information stored in the database can only be mapped to real geographic location information by the mobile communication network operator. On the other hand, the stored location information is sufficient to provide the requested location information like e.g. the responsible PSAP.

An unclaimed aspect relates to a method for associating unique data network identifiers of data networks with location information in a database using a mobile device according to the present invention comprising the steps of retrieving from an identified data network a unique network identifier and at the same time determining the location of the mobile device; sending the unique network identifier and the determined location information to a database associating unique data network identifiers of data networks with location information corresponding to these data networks; and storing the received information in the database.

Advantageously the location information can be retrieved by cell tower triangulation provided by the mobile communication network or the location information comprises location information of the mobile communication network like e.g. a cell identifier or a location area identifier. The determined location information are send to the database on discovery, during periodic updates or during regular signaling between the mobile device and a data network.

In the following the invention will be explained with respect to embodiments shown in the figures. It shows:
- Fig. 1: a schematic view of a system for providing location based services according to the present invention;
- Fig. 2a: a detailed view of a first part of a system for providing location based services according to the present invention;
- Fig. 2b: a detailed view of a second part of the system according to the present invention shown in Fig. 2a;
- Fig. 3: a flow diagram of a method for providing location based services according to the present invention;
- Fig. 4: a schematic view of a mobile device according to the present invention;
- Fig. 5: a flow diagram of a method for associating unique network identifiers of data networks to location information in a database according to the present invention; and
- Fig. 6: entries in a database associating unique network identifiers of data networks to location information according to the present invention.

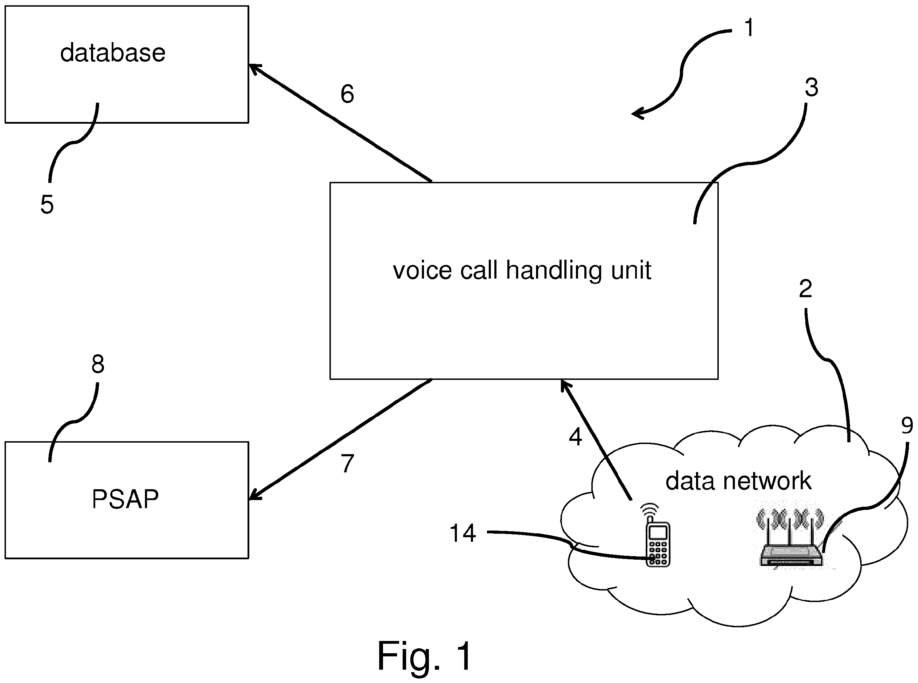

Fig. 1 shows a schematic view of an inventive system 1 providing location based services, like e.g. emergency calls, for voice calls 4 originating from a data network 2. The shown system 1 comprises a voice call handling unit 3 for receiving 10, processing and/or forwarding 13 voice calls 4 originating from the data network 2. In the system 1 according to figure 1 the voice call handling unit 3 receives 10, processes and forwards 13 voice calls 4 originating from the data network 2. However, it is also possible that some of these functions are provided by independent units communicating with the voice call handling unit 3 or together building a voice call handling unit 3.

The system 1 further comprises a database 5, which associates unique network identifiers 21 of data networks 2 with location information 22 corresponding to these data networks 2.

In case the voice call handling unit 3 receives 10 an incoming voice call 4 from the data network 2, the voice call handling unit 3 extracts a unique data network identifier 21 from the incoming voice call 4.

After extracting 11 the unique data network identifier 21 from the incoming voice call 4 the voice call handling unit 3 sends a request 6 to the database 5 querying location information 22 associated with the unique data network identifier 21. The database 5 delivers the requested location information 22 to the voice call handling unit 3.

In consideration of the location information 22 requested and received from the database 5 the voice call handling unit 3 forwards 13 the voice call 7 to a specific destination, e.g. to a Public Safety Answering Point (PSAP) responsible for the geographical area corresponding to the location information 22 requested/received from database 5.

The data network 2 uses the Internet Protocol (IP) as a transport protocol on the network layer according to the Open Systems Interconnections Model (OSI-Model). In the embodiment of Fig. 1 the data network 2 is a Wireless Local Area Network (WLAN) set up by a so-called hotspot 9.

The hotspot 9 has a network device setting up the WLAN, wherein this network device has, like any network device, a Media-Access-Control (MAC) address uniquely identifying the network device. Additionally the network device of hotspot 9 can have a so-called Basic Set Identification (BSSID) which is also unique.

According to the embodiment of Fig.1 the unique network identifier 21 of data networks 2 stored in database 5 and associated with location information 21 comprise the MAC address and/or BSSID of network devices to uniquely identifying data networks 2.

The specific destination where the voice call 7 is forwarded to relates to the geographical location of the data network 2 from which the voice call 4 originates. For example the specific destination is the PSAP responsible for the geographical location where the data network 2 (WLAN) is located.

The data network 2 respectively the voice call 4 uses the Session Initiation Protocol (SIP) for signaling. In the SIP message the unique network identifier 21 of the data network 2, like MAC address or BSSID, is included, for instance including the BSSID in the P-Access-Network-Info header in the SIP INVITE message.

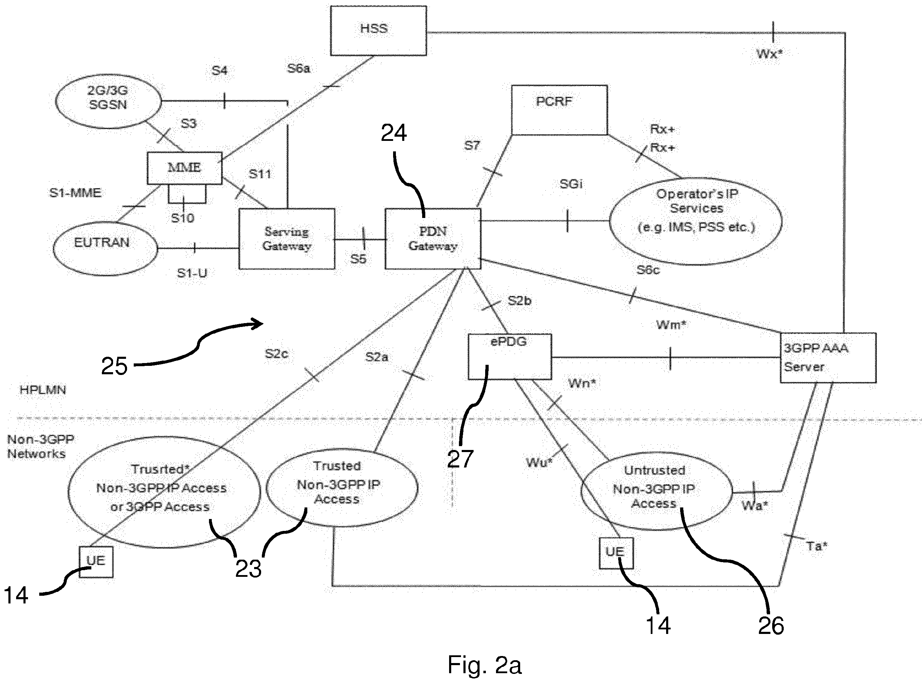

According to Fig. 2a a mobile device 14, also referred to as user entity (UE), can connect to a Home Public Land Mobile Network (HPLMN) 25 via a trusted non-3GPP IP access 23 like a WLAN or via a trusted 3GPP access 23 like UMTS or LTE. The connection of the mobile device 14 via a trusted access 23 is connected to the Packet Data Network (PDN) Gateway 24 of the HPLMN 25. The PDN Gateway 24 provides connectivity from the user device 14 to external packet data networks 2 by being the point of exit and entry of traffic for the user device 14. A user device 14 may have simultaneous connectivity with more than one PDN Gateway 24 for accessing multiple data networks 2. The PDN Gateway 24 performs policy enforcement, packet filtering for each user, charging support, lawful interception and packet screening. A further key role of the PDN Gateway 24 is to act as the anchor for mobility between 3GPP and non-3GPP technologies such as WiMAX and 3GPP2 (CDM 1X and EvDO).

Alternatively the user device 14 can use an untrusted non-3GPP IP access 26 for connecting to the HPLMN 25. Such a connection is directed towards the Evolved Packet Data Gateway (ePDG) 27 of the HPLMN 25. The main function of the ePDG 27 is to secure the data transmission with the user device 14 connected to the Evolved Packet Core (EPC) of the HPLMN 25 over an untrusted non-3GPP access 26. For this purpose, the ePDG 27 acts as a termination node of IPsec tunnels established with the user device 14. From the ePDG 27 the connection is directed to the PDN Gateway 24.

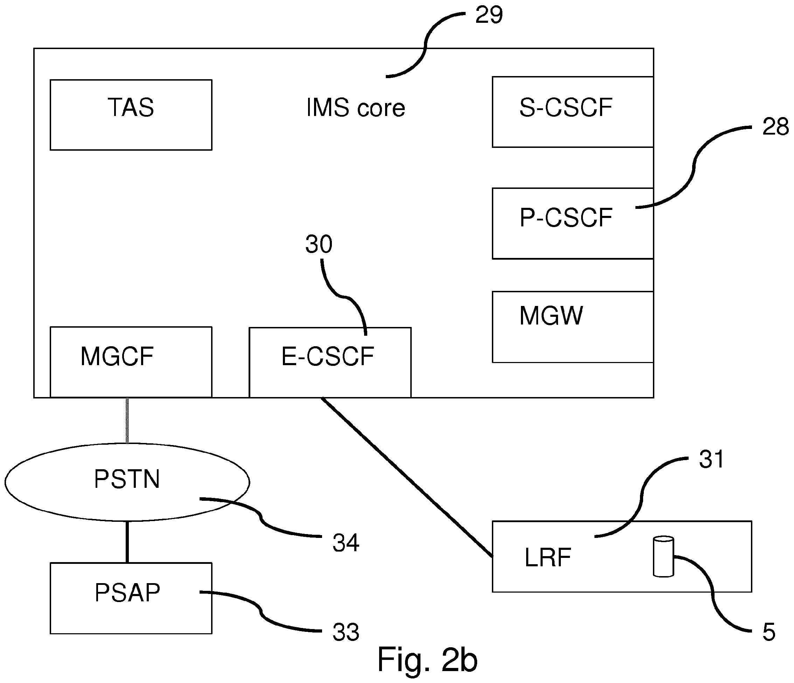

From the PDN Gateway the connection is for example directed towards a Proxy Call Session Control Function (P-CSCF) 28 of an IP Multimedia Subsystem (IMS) core 29, also referred to as IP Multimedia Core Network Subsystem, which is shown in Fig. 2b. The IMS 29 is an architectural framework for delivering IP multimedia services. To ease the integration with the internet, the IMS 29 uses IETF protocols wherever possible, e.g. SIP protocol. According to 3GPP, the IMS 29 is not intended to standardize applications, but rather to aid the access of multimedia and voice applications from wireless and wired terminals, i.e., to create a form of fixed-mobile convergence (FMC). A P-CSCF 28 is a SIP proxy that is the first point of contact for the IMS terminal. It can be located either in the visited network (in full IMS networks) or in the home network (when the visited network is not IMS compliant yet). Some networks may use a Session Border Controller (SBC) for this function. The P-CSCF 28 is at its core a specialized SBC for the User-network interface which not only protects the network, but also the IMS 29 terminal.

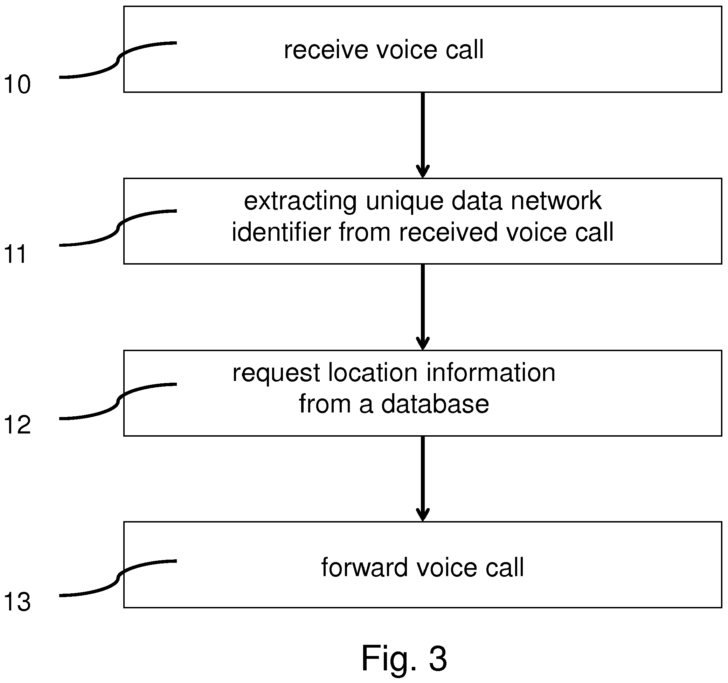

From the P-CSCF the connection of the user device 14 is directed towards the Emergency Call Session Control Function (E-CSCF) 30 of the IMS core 29. The E-CSCF 29 handles emergency calls originating from a data network 2. The E-CSCF calls a Location Retrieval Function (LRF) 31 to determine the location of the mobile device 14. For determining the location of mobile devices 14 connected via a data network 2 the LRF comprises a database 5 which associates unique data network identifiers 21 of data networks 2 with location information 22 corresponding to these data networks 2. The detailed method for retrieving the location of the mobile device 14 is explained with respect to Fig. 3 afterwards.

In consideration of the retrieved location the connection of the user device 14 is forwarded to the Media Gateway Controller Function (MGCF) 32 of the IMS 29 and from there to a PSAP 33 responsible for the retrieved location via the PSTN 34. The MGCF 32 enables an IMS 29 to communicate with classic circuit switched networks and modern packet switched networks through a Media Gateway.

Fig. 3 shows a flow diagram of an inventive method for providing location based services, like e.g. emergency calls, for voice calls 4 originating from a data network 2. According to a first step of this inventive method a voice call 4 originating from a data network 2 is received 10 at a voice call handling unit 3. Next the voice call handling unit 3 extracts 11 a unique data network identifier 21 associated with the originating data network 2 from the received voice call 4. Afterwards the voice call handling unit 3 send a request 6 to a database 5 querying a location information 22 associated with the unique data network identifier 21, wherein the database 5 associates unique data network identifiers 21 of data networks 2 with location information 22. In consideration of the location information 22 requested 12 from the database 5 the voice call handling unit 3 forwards the voice call 4 to a specific destination. For example the specific destination is a service provider or a PSAP responsible for the geographical location where the data network 2 of the originating voice call 4 is located.

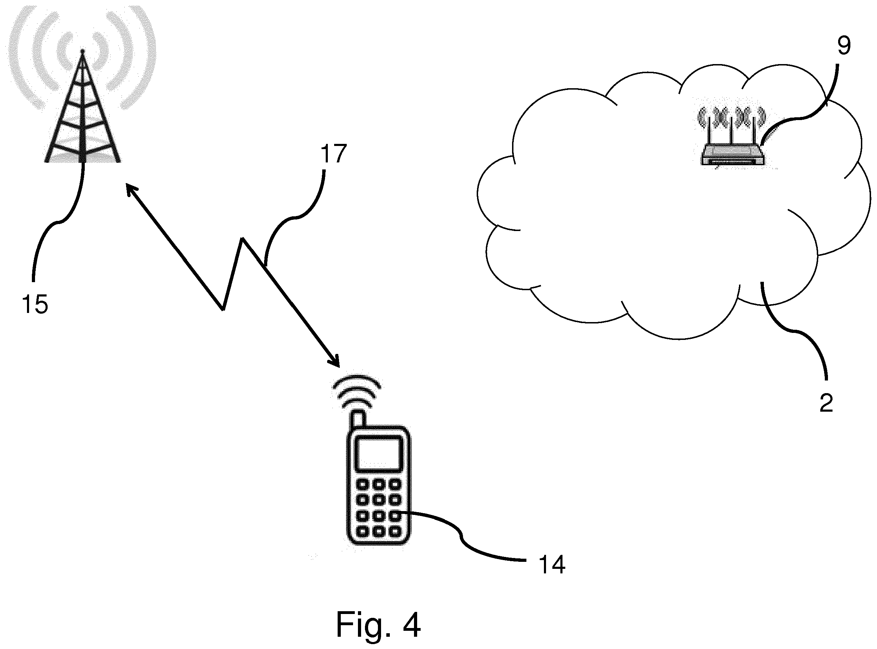

Fig. 4 shows a schematic view of an inventive mobile device 14. The mobile device 14 has a network adapter (not shown) for connecting the mobile device 14 to a data network 2. The mobile device 14 has a further network adapter (not shown) for connecting the mobile device 14 to a mobile communication network 15. The mobile device 14 further comprises means for detecting the location of the mobile device 14. The means for detecting the location of the mobile device 14 can be for example a Global Positioning System (GPS) sensor. Alternatively the means for detecting the location of the mobile device 14 are adapted to request a location information 22 from the mobile communication network 15, wherein the mobile communication network 15 for example determines the location of the mobile device 14 using a cell tower triangulation, which is known from the prior art.

The mobile device 14 of Fig. 4 has a connection 16 to the data network 2, wherein the data network 2 is a WLAN setup by hotspot 9. The mobile device 14 has a further connection 17 to a mobile communication network 15, which uses for example a GSM-, UMTS- or LTE standard.

In case the mobile device 14 is located in an area covered by the WLAN of hotspot 9 the mobile device 14 retrieves from the WLAN a unique network identifier 21. This unique network identifier 21 for example comprises a MAC address of hotspot 9 or a BSSID associated with the WLAN.

At the same the mobile device 14 determines or requests from the mobile communication network 15 information about the current location of the mobile device 14.

If the mobile device 14 has received a unique network identifier 21 and determined the location information 22 of the mobile device 14, the mobile device 14 sends the received unique network identifier 21 and the determined location information 22 to a database 5. This database 5 associates unique data network identifiers 21 of data networks 2 with location information 22 corresponding to these data networks 2. The information are send via the data network 2 (WLAN) or via the mobile communication network 15 to the database 5.

The unique network identifier 21 and the determined location information 22 can be send to the database 5 on discovery, during periodic updates or during regular signaling between the mobile device 14 and the data network 2 and/or mobile communication network 15.

Alternatively the mobile device 14 can send the unique network identifier 21 of data network 2 via connection 17 to the mobile communication network 15, for example during the regular signaling between the mobile device 14 and the mobile communication network 15. Examples for such regular signaling messages are the LOCATION UPDATING REQUEST, the ROUTING AREA UPDATE REQUEST or the TRACKING AREA UPDATE REQUEST. The mobile communication network 15 determines the current location of the mobile device 14, e.g. by cell tower triangulation, and sends the received unique network identifier 21 and the determined location information to database 5.

In either embodiment the database 5 stores the unique network identifier 21 and the corresponding location information 22, if it is not known, in database 5.

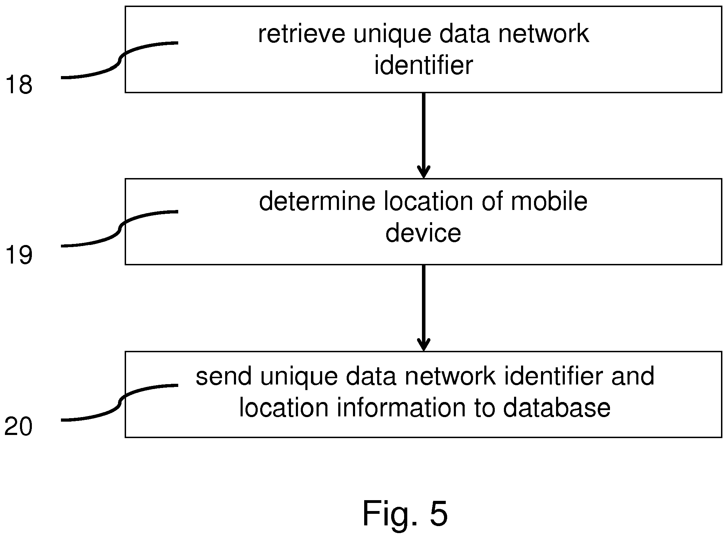

Fig. 5 shows a flow diagram of an inventive method for associating unique network identifiers 21 of data networks 2 to location information 22 in a database 5 using a mobile device 14, for example using the mobile device 14 of Fig. 4.

In a first step the mobile device 14 retrieves from a data network 2 a unique data network identifier 21. At the same time the location of the mobile device 14 is determined. This can be done for example using a GPS sensor of the mobile device 14 or by a mobile communication network 15 using a cell tower triangulation.

The unique network identifier 21 and the determined location information 22 are send to a database 5. The database 5 associates unique data network identifiers 21 of data networks 2 to location information 22 corresponding to these data networks 2. The unique network identifier 21 and the determined location information 22 can be send to the database 5 by the mobile 14 or by the mobile communication network 15.

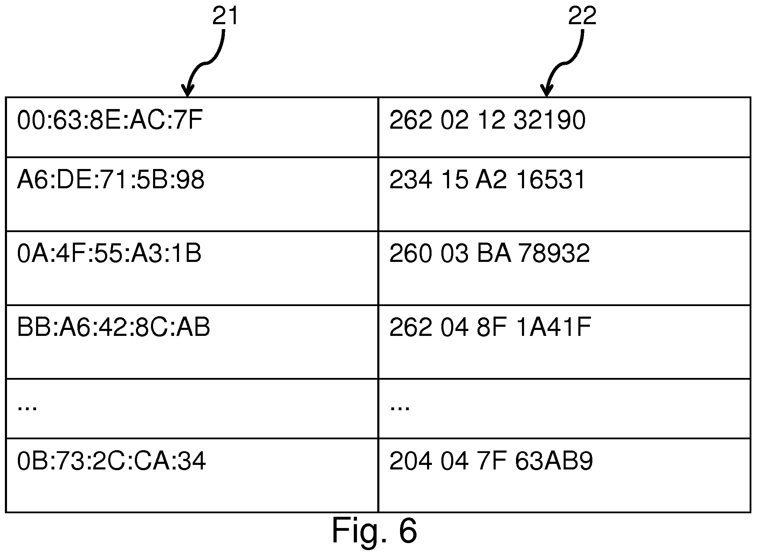

Fig. 6 shows entries in a database 5 associating unique network identifiers 21 of data networks 2 to location information 22. The left column of the database entries in database 5 contains unique data network identifiers 21 in the form of a BSSID comprising e.g. 10 bytes. The right column of the database entries in database 5 contains location information 22. The location information 22 consists of a so-called Location Area Identifier (LAI) and a Cell Identification (Cell-ID). The Location Area Identifier consists of a Mobile Country Code (MCC), and a Mobile Network Code (MNC) and a Location Area Code (LAC). The first row of database 5 refers to a data network 2 with the BSSID 00:63:8E:AC:7F as the unique data network identifier 21 and with a location information 22 consisting of an LAI comprising the MCC 262 for Germany, MNC 02 for Vodafone and a LAC 12 in combination with the Cell-ID 32190. The location information of the second row of database 5 refers to Vodafone in UK with a LAC A2 and a Cell-ID 16531. The third row of the database 5 refers to the network Orange in Poland with the LAC BA and the Cell-ID 78932 and the fourth row of database 5 refers to Vodafone in Germany with the LAC 8F and the Cell-ID 1A41F. The lat row of the database 5 refers to a unique data network identifier with the BSSID 0B:73:2C:CA:34 and the location information 22 comprising the LAI consisting of the MCC 204 for Netherlands, MNC 04 for Vodafone and LAC 7F and the Cell-ID 63AB9.

### List of references:

- 1: system
- 2: data network
- 3: voice call handling unit
- 4: voice call
- 5: database
- 6: request
- 7: forwarded voice call
- 8: specific destination
- 9: hotspot
- 10: receiving voice call
- 11: extracting unique data network identifier
- 12: requesting location information from database
- 13: forwarding voice call
- 14: mobile device
- 15: mobile communication network
- 16: connection to data network
- 17: connection to mobile communication network
- 18: retrieving unique data network identifier
- 19: determining location of mobile device
- 20: sending information to database
- 21: unique data network identifier
- 22: location information
- 23: trusted access
- 24: PDN Gateway
- 25: HPLMN
- 26: untrusted access
- 27: ePDG
- 28: P-CSCF
- 29: IMS
- 30: E-CSCF
- 31: LRF
- 32: MGCF
- 33: PSAP
- 34: PSTN

## Claims

1. System (1) for providing location based services, for emergency calls, for voice calls (4) originating from a data network (2), which is a wireless local area network (WLAN), wherein the system (1) comprises:
a voice call handling unit (3), configured to receive (10), process and/or forward (13) voice calls (4) originating from the data network (2); and
a database (5), which is configured to associate unique data network identifiers (21) of data networks (2) with location information (22) corresponding to these data networks (2), wherein the location information (22) stored in the database (5) comprises a Public Safety Answering Point, PSAP, or a service provider identifier;
wherein the voice call handling unit (3) is further configured to
extract a unique data network identifier (21) from an incoming voice call (4) from the data network (2), the unique data network identifier (21) comprising a last accessed WLAN Basic Set Identification (BSSID) of a device providing the data network (2),
send a request (6) comprising the unique data network identifier (21) to the database (5) for querying a location information (22) associated with the unique data network identifier (21), and
forward (13) the voice call (7) in consideration of the location information (22) requested from the database (5) to the PSAP or the service provider which is responsible for the geographical location of the data network (2) from which the voice call (4) originates,
wherein the voice call handling unit (3) is included in an IP Multimedia Subsystem, IMS, according to the 3^{rd} Generation Partnership Project, 3GPP, of the system (1).

2. System (1) according to claim 1, wherein the data network (2) is configured to use the Internet Protocol (IP) and particularly is a local area network or a wireless local area network.

3. System (1) according to claim 1 or claim 2, wherein the voice call handling unit (3) is a software unit included in the IP Multimedia Subsystem (IMS).

4. Method for providing location based services, for emergency calls, for voice calls originating from a data network (2), which is a wireless local area network (WLAN), comprising the steps of:
receiving (10) a voice call (4) originating from a data network (2) at a voice call handling unit (3), wherein the voice call handling unit (3) is included in an IP Multimedia Subsystem, IMS, according to the 3^{rd} Generation Partnership Project, 3GPP, of the system (1);
extracting (11) from the received voice call (4) a unique data network identifier (21) associated with the originating data network (2), the unique data network identifier (21) comprising a last accessed WLAN Basic Set Identification (BSSID) of a device providing the data network (2);
sending (12) a request (6) comprising the unique data network identifier (21) for querying a location information (22) associated with the unique data network identifier (21) to a database (5) which associates unique data network identifiers (21) of data networks (2) with location information (22), wherein the location information (22) stored in the database (5) comprises a Public Safety Answering Point, PSAP, or a service provider identifier; and
forwarding (13) the voice call (4) in consideration of the location information (22) requested (12) from the database (5) to the PSAP or the service provider which is responsible for the geographical location of the data network (2) from which the voice call (4) originates.

5. System (1) or method according to any of claims 1 to 4, wherein the signaling protocol of the data network (2) and/or the voice call (4) is the Session Initiation Protocol (SIP).

6. System (1) or method according to claim 5, wherein the SIP message comprises the unique network identifier (21), preferably the BSSID, further preferred including the BSSID in the P-Access-Network-Info header in the SIP INVITE message.

## Patentansprüche

1. System (1) zur Bereitstellung von ortsbezogenen Diensten, für Notrufe, für Sprachanrufe (4), die von einem Datennetzwerk (2) ausgehen, das ein drahtloses lokales Netzwerk (WLAN) ist, wobei das System (1) umfasst:
eine Sprachanruf-Handhabungseinheit (3), die so konfiguriert ist, dass sie Sprachanrufe (4), die aus dem Datennetz (2) stammen, empfängt (10), verarbeitet und/oder weiterleitet (13); und
eine Datenbank (5), die so konfiguriert ist, dass sie eindeutige Datennetzkennungen (21) von Datennetzen (2) mit Standortinformationen (22) verknüpft, die diesen Datennetzen (2) entsprechen, wobei die in der Datenbank (5) gespeicherten Standortinformationen (22) eine Kennung für einen öffentlichen Sicherheitsanrufpunkt (Public Safety Answering Point, PSAP) oder einen Dienstanbieter umfassen;
wobei die Sprachanruf-Handhabungseinheit (3) ferner so konfiguriert ist zum
Extrahieren einer eindeutigen Datennetzkennung (21) aus einem eingehenden Sprachanruf (4) aus dem Datennetz (2), wobei die eindeutige Datennetzkennung (21) eine WLAN-Basissatzkennung (BSSID) eines Geräts, das das Datennetz (2) bereitstellt, umfasst, auf die zuletzt zugegriffen wurde,
Senden einer Anfrage (6) mit der eindeutigen Datennetzkennung (21) an die Datenbank (5) zur Abfrage einer der eindeutigen Datennetzkennung (21) zugeordneten Standortinformation (22), und
Weiterleiten (13) des Sprachanrufs (7) unter Berücksichtigung der aus der Datenbank (5) angeforderten Standortinformationen (22) an den öffentlichen Sicherheitsanrufpunkt (PSAP) oder den Dienstanbieter, der für den geografischen Standort des Datennetzes (2), von dem der Sprachanruf (4) ausgeht, zuständig ist,
wobei die Sprachanruf-Handhabungseinheit (3) in einem IP Multimedia Subsystem, IMS, gemäß dem 3^{rd} Generation Partnership Project, 3GPP, des Systems (1) enthalten ist.

2. System (1) nach Anspruch 1, wobei das Datennetz (2) so konfiguriert ist, dass es das Internetprotokoll (IP) verwendet und insbesondere ein lokales Netz oder ein drahtloses lokales Netz ist.

3. System (1) nach Anspruch 1 oder Anspruch 2, wobei die Sprachanruf-Handhabungseinheit (3) eine im IP Multimedia Subsystem (IMS) enthaltene Softwareeinheit ist.

4. Verfahren zur Bereitstellung von ortsbezogenen Diensten, für Notrufe, für Sprachanrufe, die von einem Datennetz (2) ausgehen, das ein drahtloses lokales Netz (WLAN) ist, mit den folgenden Schritten:
Empfangen (10) eines Sprachanrufs (4), der von einem Datennetz (2) ausgeht, an einer Sprachanruf-Handhabungseinheit (3), wobei die Sprachanruf-Handhabungseinheit (3) in einem IP Multimedia Subsystem, IMS, gemäß dem 3^{rd} Generation Partnership Project, 3GPP, des Systems (1) enthalten ist;
Extrahieren (11) einer eindeutigen Datennetzkennung (21) aus dem empfangenen Sprachanruf (4), die dem Ursprungsdatennetz (2) zugeordnet ist, wobei die eindeutige Datennetzkennung (21) eine WLAN-Basissatzkennung (BSSID) eines Geräts, das das Datennetz (2) bereitstellt, umfasst, auf die zuletzt zugegriffen wurde;
Senden (12) einer Anforderung (6), die die eindeutige Datennetzkennung (21) umfasst, zum Abfragen einer Standortinformation (22), die der eindeutigen Datennetzkennung (21) zugeordnet ist, an eine Datenbank (5), die eindeutige Datennetzkennungen (21) von Datennetzen (2) mit Standortinformationen (22) verknüpft, wobei die in der Datenbank (5) gespeicherte Standortinformation (22) eine Kennung eines öffentlichen Sicherheitsanrufpunkts (Public Safety Answering Point, PSAP) oder eines Dienstanbieters umfasst; und
Weiterleiten (13) des Sprachanrufs (4) unter Berücksichtigung der aus der Datenbank (5) angeforderten (12) Standortinformationen (22) an den öffentlichen Sicherheitsanrufpunkt (PSAP) oder den Dienstanbieter, der für den geografischen Standort des Datennetzes (2), von dem der Sprachanruf (4) ausgeht, zuständig ist.

5. System (1) oder Verfahren nach einem der Ansprüche 1 bis 4, wobei das Signalisierungsprotokoll des Datennetzes (2) und/oder der Sprachverbindung (4) das Session Initiation Protocol (SIP) ist.

6. System (1) oder Verfahren nach Anspruch 5, wobei die SIP-Nachricht die eindeutige Datennetzkennung (21), vorzugsweise die BSSID, umfasst, wobei es weiterhin bevorzugt ist, die BSSID in den P-Access-Network-Info-Header in der SIP-INVITE-Nachricht aufzunehmen.

## Revendications

1. Système (1) pour fournir des services basés sur la localisation, pour les appels d'urgence, pour les appels vocaux (4) provenant d'un réseau de données (2), qui est un réseau local sans fil (WLAN), dans lequel le système (1) comprend:
une unité de traitement des appels vocaux (3), configurée pour recevoir (10), traiter et/ou acheminer (13) des appels vocaux (4) provenant du réseau de données (2); et
une base de données (5) configurée pour associer des identifiants uniques (21) de réseaux de données (2) à des informations de localisation (22) correspondant à ces réseaux de données (2), les informations de localisation (22) stockées dans la base de données (5) comprenant un point de réponse de sécurité publique (PSAP) ou un identifiant de fournisseur de services;
L'unité de traitement des appels vocaux (3) est en outre configurée pour
extraire un identifiant unique de réseau de données (21) d'un appel vocal entrant (4) du réseau de données (2), l'identifiant unique de réseau de données (21) comprenant la dernière identification d'un ensemble de base WLAN (BSSID) d'un appareil fournissant le réseau de données (2),
envoyer une requête (6) comprenant l'identifiant unique de réseau de données (21) à la base de données (5) pour interroger une information de localisation (22) associée à l'identifiant unique de réseau de données (21), et
transmettre (13) l'appel vocal (7) en tenant compte des informations de localisation (22) demandées à la base de données (5) au PSAP ou au fournisseur de services responsable de la localisation géographique du réseau de données (2) d'où provient l'appel vocal (4),
l'unité de traitement des appels vocaux (3) fait partie d'un sous-système multimédia IP (IMS) du système (1), conformément au projet de partenariat de génération 3^{rd} (3GPP).

2. Système (1) selon la revendication 1, dans lequel le réseau de données (2) est configuré pour utiliser le protocole Internet (IP) et est en particulier un réseau local ou un réseau local sans fil.

3. Système (1) selon la revendication 1 ou la revendication 2, dans lequel l'unité de traitement des appels vocaux (3) est une unité logicielle incluse dans le sous-système multimédia IP (IMS).

4. Méthode pour fournir des services basés sur la localisation, pour les appels d'urgence, pour les appels vocaux provenant d'un réseau de données (2), qui est un réseau local sans fil (WLAN), comprenant les étapes suivantes:
réception (10) d'un appel vocal (4) provenant d'un réseau de données (2) au niveau d'une unité de traitement des appels vocaux (3), l'unité de traitement des appels vocaux (3) faisant partie d'un sous-système multimédia IP (IMS) du système (1), conformément au projet de partenariat pour la génération 3^{rd} (3GPP);
extraire (11) de l'appel vocal reçu (4) un identifiant de réseau de données unique (21) associé au réseau de données d'origine (2), l'identifiant de réseau de données unique (21) comprenant une identification d'ensemble de base WLAN (BSSID) du dernier accès d'un appareil fournissant le réseau de données (2);
envoyer (12) une requête (6) comprenant l'identifiant unique de réseau de données (21) pour interroger une information de localisation (22) associée à l'identifiant unique de réseau de données (21) à une base de données (5) qui associe des identifiants uniques de réseau de données (21) de réseaux de données (2) à une information de localisation (22), dans laquelle l'information de localisation (22) stockée dans la base de données (5) comprend un point de réponse de sécurité publique, PSAP, ou un identifiant de fournisseur de services; et
acheminer (13) l'appel vocal (4) en fonction des informations de localisation (22) demandées (12) à la base de données (5) au PSAP ou au fournisseur de services responsable de la localisation géographique du réseau de données (2) d'où provient l'appel vocal (4).

5. Système (1) ou méthode selon l'une des revendications 1 à 4, dans lequel le protocole de signalisation du réseau de données (2) et/ou de l'appel vocal (4) est le protocole SIP (Session Initiation Protocol).

6. Système (1) ou méthode selon la revendication 5, dans lequel le message SIP comprend l'identificateur de réseau unique (21), de préférence le BSSID, de préférence encore en incluant le BSSID dans l'en-tête P-Access-Network-Info du message SIP INVITE.
